# EUROPEAN PATENT APPLICATION

(11) **EP 2 759 974 A1**
(43) Date of publication of application: **30.07.2014**
(21) Application number: 14152879.4
(22) Date of filing: 28.01.2014
(51) Int. Cl.: G06Q 30/02

(54) **Passive improvement of data quality based on user preference**

(30) Priority: 28.01.2013 US 201313751423
(71) Applicant: NEOPOST TECHNOLOGIES, 92220 Bagneux (FR)
(72) Inventor: Larson, Douglas, Randall, Tacoma, WA 98407 (US); Perin, Robert, W., Duvall, WA 98109 (US)
(74) Representative: David, Alain

(57) **Abstract**

Methods and systems for generating and applying quality ratings to data records, such as for use with mailing lists and similar applications, are provided. Information such as use information may be obtained for a plurality of data records, each of which is associated with a potential recipient of a mailpiece. A quality rating may be assigned to each data record, which indicates an assigned likelihood that a solicitation mailpiece is expected to receive a favorable response from the potential recipient. These quality ratings may be stored and an indication of the quality rating for each data record may be provided to a mailer. The quality ratings may be generated or updated based upon how the associated data records are used by the mailer and/or subsequent mailers.

## Description

### BACKGROUND

When a mailer desires to solicit a customer base via targeted mailings, the mailer customarily obtains a mailing list of known, actual, and/or potential customers, and may perform a variety of data and address optimizations upon the mailing list. Associated data and address optimization services typically have a per-record processing cost and may provide value via reduction in costs associated with producing the mailing via postal discounts.

### BRIEF SUMMARY

Embodiments presented herein disclose methods and systems for generating and applying quality ratings to data records, such as for use with mailing lists and similar applications. Information such as use information may be obtained for a plurality of data records, each of which is associated with a potential recipient of a mailpiece. A quality rating may be assigned to each data record, which indicates an assigned likelihood that a solicitation mailpiece is expected to receive a favorable response from the potential recipient. These quality ratings may be stored and an indication of the quality rating for each data record may be provided to a mailer. The quality ratings may be generated or updated based upon how the associated data records are used by the mailer and/or subsequent mailers. The quality ratings also may be updated based upon other information obtained for the data records, such as how the data records have been used in the past, other services or operations requested or performed with the data records, or the like. Thus, the quality of entries in a mailing list or other data record collection may be identified, tracked, and used to adjust how the mailing list is used.

Additional features, advantages, and implementations of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows an example data flow and techniques according to an embodiment of the invention.
FIG. 2 shows an example illustration of an optimization service provider according to an embodiment of the invention
FIG. 3 shows an example process according to an embodiment of the invention.
FIG. 4 shows a computer suitable for implementing an embodiment of the present invention.

### DETAILED DESCRIPTION

It may be advantageous to a mailer to perform a search to narrow potential recipients within a mailing list to include only those recipients within the mailing list which are most likely to respond favorably to a solicitation, in order to increase the value of the data and address optimization services. For example, a mailer may wish to limit a mailing to only those potential recipients that are likely to purchase goods or services based upon the mailing. In conventional systems, a mailer must either perform time-consuming analysis to narrow their mailing list, or pay service fees for data and address optimization on an over-broad selection from the mailing list, which may result in more customers than desired being included in the final list.

For example, a mailer conventionally may actively perform an analysis of the mailing list, and provide input to an optimization service provider that describes the "quality" of each specific recipient within the mailing list. Such a "quality" metric conventionally indicates a likelihood that the mailer will proceed to include the specific recipient within the targeted mailing solicitation. Alternatively, in the absence of such analysis and input, the optimization service provider may provide their services upon an over-broad list of potential recipients, resulting in decreased value of the processing costs to the mailer.

It has been found that there are a variety of mailer activities that a service provider may capture to infer the "quality" of a specific recipient within the mailing list, without requiring explicit indications of the "quality" from the mailer. In some instances, the probability of inferred "quality" may be increased by a sequentially cumulative nature of the captured activities. For example, an optimization service provider may track metrics such as whether a data record pertaining to a specific recipient had been included in a prior purchase of the optimization services; whether the optimization services included in prior purchase for a data record included postal code sorting; whether a mailpiece associated with the purchased and sorted data record was actually mailed; whether the recipient is applicable to the mailer's core business; whether any of the above activities have taken place more than once, and the like. In addition, various combinations of these metrics may be used to more specifically tailor mailing list entries to a mailer's desired level of quality or other requirement.

Just as these and similar activities may be cumulative positive indications of the inferred quality of a data record associated with a recipient within a mailing list, the absence of certain subsequent activities may be cumulative negative indicators. For example, if a mailer has initially included a data record of specific recipient, but excluded that data record within a subsequent sorting optimization, and/or did not mail any mailpiece associated with the data record for which the initial optimization services had been purchased, the relative quality of the record may be decreased. Similarly, if a mailer had repeatedly indicated that a particular data record from a mailing list should be excluded from optimization services, it may be inferred that the quality of that record is relatively lower. Thus, an optimization service provider may consider techniques and addresses that have been used and/or are known to have been successful in the past, or which records elsewhere have been used in a similar fashion, to assign a likelihood of a positive response to a particular mailing. In some configurations, a service provider may consider whether a record has passed through similar systems to assign a value to the record. For example, if a record has been submitted for a move update, been marked as undeliverable, or the like, the service provider may consider these results as well when assigning a quality value to the record. By monitoring these and similar activities, a service provider may develop an assessment of specific records relative to specific mailers within a given mailing list. The assessment may be a relative or absolute ranking, a general positive/negative/neutral recommendation for the record, a numerical or subjective rating assigned to the record, or the like.

As a specific example, a service provider may maintain records of patterns of optimization services obtained by a mailer for one or more data records in a mailing list. The optimization services may be provided by a single provider, or may be provided by multiple associated or independent providers. The use of those services, and the results for individual data records, may be tracked and applied to the quality rating assigned to a data record during a subsequent rating. Similarly, if one or more of the services used intelligent mail barcodes (IMBs) to track mailpieces, the IMB tracking data for a mailpiece may be associated with that mailpiece's data record, so that an indication of whether a particular mailpiece was mailed and/or delivered can further be used to assign a quality rating to the associated data record.

As indicated above, each additional activity performed with respect to a mailing list or individual data record in a mailing list may increase the confidence associated with the quality rating of a data record. That is, a higher confidence may be assigned to a data record to which multiple optimization services have been applied, and/or for which a mailpiece had been created and mailed multiple times; a lower confidence may be assigned to a data record that a mailer had removed from a mailing list, and/or for which the mailer opted not to have optimization services applied, with an increasingly lower confidence assigned as these activities are repeated.

In an embodiment, an optimization service provider also may provide ratings, confidence values, suggestions, or other indications of quality ratings for data records in a mailing list to a mailer. For example, the optimization service provider may receive a proposed mailing list from a mailer, and provide an annotated or subsequent list that indicates a relative or absolute quality rating for some or all of the data records in the mailing list. Further, at each subsequent processing request received from a mailer, the optimization service provider may verify that records having a higher confidence of quality ratings are included within a mailing list for processing, and/or suggest records that should be added to the mailing list. Similarly, the optimization service provider may confirm the absence of data records having a low confidence, and/or suggest that those present in the list with a relatively low confidence be removed from the mailing list. The optimization service provider may provide a specific quality and/or confidence value for each data record in the list, such as by providing a mailing list with numeric quality and/or confidence values for data records in the list, or the service provider may provide suggestions regarding data records without providing explicit values or indications of the underlying quality and/or confidence ratings. For example, the optimization service provider may merely indicate that a subset of records within a proposed mailing list contains entries that are "less likely," "less optimal," or the like.

In an embodiment, other data sources may be used to assign quality and/or confidence ratings to assign data records. For example, if a data record is determined to correspond to a potential mail recipient that has signed up to a "do not call" list for telephone solicitations, the data record may be assigned a lower quality value because the potential recipient may be believed to be less likely to respond to mail solicitations as well. Similarly, a potential recipient's response or lack of response to mailings sent by other mailers may be used to assign a quality value to that recipient's data record.

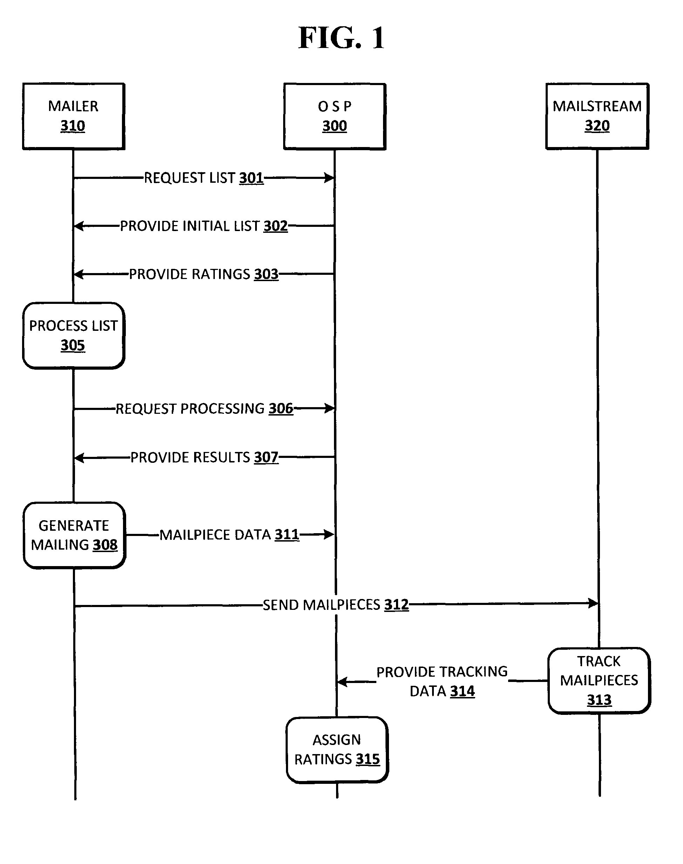

FIG. 1 shows an example data flow and techniques according to an embodiment of the invention. A mailer 310, optimization service provider 300, and an illustrative mailstream 320 are shown. It will be understood that the optimization service provider 300 may also provide other services, such as address verification, address updates, shipping, franking, other postal services, and, more generally, any other service. It will also be understood that the illustrative "mailstream" 320 may be implemented by a variety of entities, systems, and techniques, such as local, regional, or national postal services, third-party shipping services, package and courier services, and the like, and that the mailstream 320 is shown as a single entity for convenience of illustration.

At 301, a mailer may purchase or otherwise obtain a mailing list 301 as previously disclosed. The mailing list may be obtained from the optimization service provider 300 (OSP), or it may be generated internally by the mailer 310 or obtained from another source. If purchased or otherwise obtained from the OSP 300, the OSP 300 may provide an initial list, at 302, based upon the criteria defined by the mailer 310 as previously disclosed. Initial quality and/or confidence ratings may be provided with or as part of the mailing list at 303, or may be provided separately to the mailer 310. For example, the mailer 310 may purchase or otherwise request a quality evaluation from the OSP 300 for some or all of the data records received from the OSP 300 at 302 as previously described.

At 305, the mailer 310 may perform various internal operations with the mailing list, such as selecting a subset of the mailing list for further processing or use with a mailing, or performing other internal validation or selection as disclosed herein. The mailer 310 also may request additional processing from the OSP 300 at 306, such as to have the mailer 310 purchase additional address verification, recipient relocation data updates ("move updates"), ZIP code verification, or the like from the OSP 300. If additional processing is requested, the OSP 300 may provide an updated or annotated mailing list at 307 as disclosed herein.

At 308, the mailer 310 may use the mailing list to generate a mailing. The entire mailing list may be used, or only selected data records may be used to generate the mailing. For example, the mailing list may include only those data records that meet a minimum threshold quality rating. Alternatively or in addition, the mailer 310 may select a subset of data records in the mailing list that results from prior operations to generate the mailing. In some cases, the act of generating the mailing may cause mailpiece data, such as tracking data, to be provided to the OSP 300 at 311. For example, if the mailer 310 uses software or systems provided by the OSP 300 to generate mailing labels, addresses, or the like, the software may generate IMBs or similar tracking items that are also provided to the OSP 300. The mailer 310 may then place the mailpieces into the mailstream 320 at 312.

Once in the mailstream 320 or equivalent delivery systems, the mailpieces may be tracked for movement, delivery, and the like at 313, as previously described and consistent with tracking techniques that are known in the art. Tracking data may be provided to the OSP 300 at 314. For example, where IMBs or similar tracking codes are applied to the mailpieces when the mailing is generated at 308, the tracking codes may be used to track movement of the mailpieces within the mailstream 320. This information may be collected by the OSP 300 and associated with the data records used to generate the mailpieces. At 315, the OSP 300 may then use any or all of the data received from the mailer and the mailstream tracking provided at 314 to assign quality ratings to the data records used to generate the mailpieces as disclosed herein.

It will be understood that the various steps and techniques described with respect to FIG. 1 may not be performed in every case, and/or that they may be performed in an order other than the specific order illustrated. For example, the mailer 310 may not request additional processing as shown at 306, or may request more than one type or iteration of various processing offered by the OSP 300. As another example, the OSP 300 may collect relevant data and assign quality and confidence ratings throughout the processes shown, as well as or instead of only after the mailpieces have been delivered through the mailstream 320 as shown at 315.

In an embodiment, demographic information may be used to assign or adjust the quality of a data record. For example, it may be determined that for a particular type of mailing, or for mailings by a specific mailer 310, recipients of a specific demographic may be more or less likely to respond to the mailing. Example demographic categories include age, income, residence location, household size, gender, race, nationality, marital status, family status, occupation, and the like. The demographic information used to assign quality ratings may be separate from any such demographics used to construct a mailing list initially. For example, a mailer may construct a mailing list that is intended to target recipients of a certain age and income range. An optimization service provider may consider the age and income, and/or other demographic information related to data records in the list, to assign a quality rating to those data records.

Quality and/or confidence values assigned to data records may be mailer-specific, or they may be associated with data records independent of the mailer 310. For example, some data records may be considered to have a relatively high quality overall, but a relatively low quality when used by a specific mailer 310. In an embodiment, an optimization service provider 300 may maintain overall and/or mailer-specific indications of quality and/or confidence values of data records.

Notably, the techniques disclosed herein may be considered "passive" optimization techniques, because they do not require any explicit action or information from a mailer 310 other than would be required for the mailer 310 to use the optimization or other services offered by the optimization service provider 300 or other service providers and, therefore, rely only on information obtained from or arising as the result of other processes. For example, information regarding how a mailer 310 has used data records in the past, tracking information, delivery information, and other information disclosed herein for determining a quality and/or confidence value for a data record, may be available to the optimization service provider 300 as an inevitable consequence of the mailer's 310 use of other services. As a specific example, a mailer 310 may obtain a mailing list by purchasing it from an optimization service provider 300 or other source. The mailer 310 may remove some data records from the mailing list, and use sorting or other processing software to prepare the data records for use in a mailing; this software may be provided by the optimization service provider 300 or may make data available to the optimization service provider 300 when used or as part of subsequent mailing processes. As part of the mailing process, each mailpiece typically is assigned a tracking code such as an IMB that may be used to track movement and delivery of the mailpiece. Tracking data may be made available to the optimization service provider 300 as part of the routine movement and delivery of the mailpiece, such as where the service provider software is used to sort and/or apply the tracking code. Thus, the optimization service provider 300 receives information indicating which data records were actually used on mailpieces, when the mailpieces were sent, when the mailpieces were delivered, and, in some cases, whether an associated response is sent by the recipient (such as where a return envelope with a corresponding tracking code is returned). This data may be collected and used by the optimization service provider 300 to assign a quality rating to the data records initially provided to the mailer 310.

In an embodiment, different weights may be applied to different actions performed by a mailer 310 for purposes of assigning a quality rating to a data record. For example, if the mailer 310 has historically been over-inclusive when selecting data records for a mailing list, any removal of a record from the mailing list may be given a greater weight than the inclusion of a data record in a mailing list by the same mailer 310. Similarly, if a mailer 310 repeatedly performs the same action with respect to a particular data record, the action may be given a greater weight when calculating the quality rating for that record compared to a "one-off" action performed by the same mailer 310. Thus, at the most granular level, quality and confidence ratings may be assigned per-mailer 310 and per-data record, such that each data record maintained by an optimization service provider 300 may have a different quality rating for each mailer 310.

Although described with respect to physical mailing address data records, embodiments of the present invention may also be used for other contact information such as phone numbers, email addresses, computer network addresses, and the like, without departing from the scope of the present application. For example, an optimization service provider may maintain records related to email addresses or other contact data records in the same fashion, and using the same data and types of data, as described with respect to physical mailing addresses herein. More generally, any type of data that is used in a manner similar to that disclosed herein for physical mailing addresses may be used in various embodiments of the invention.

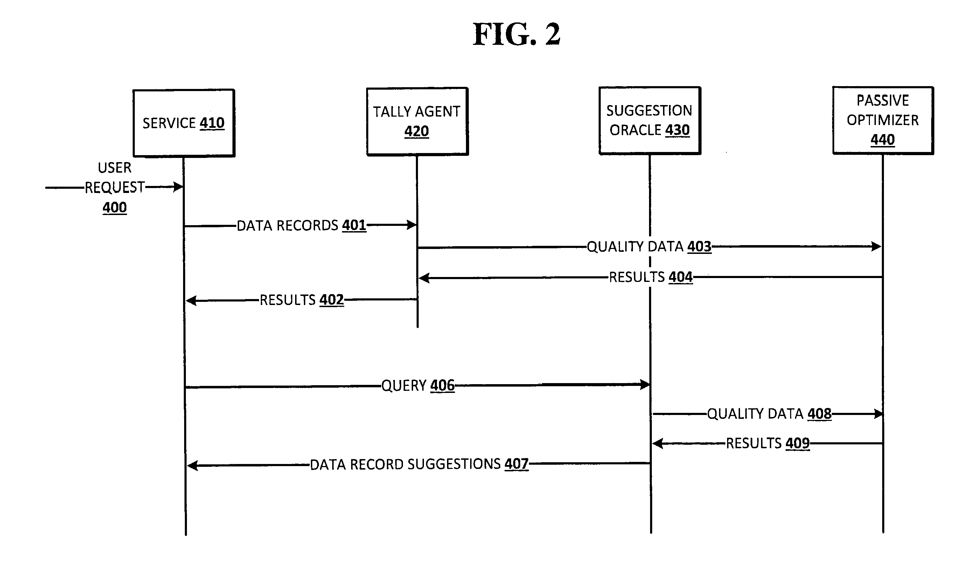

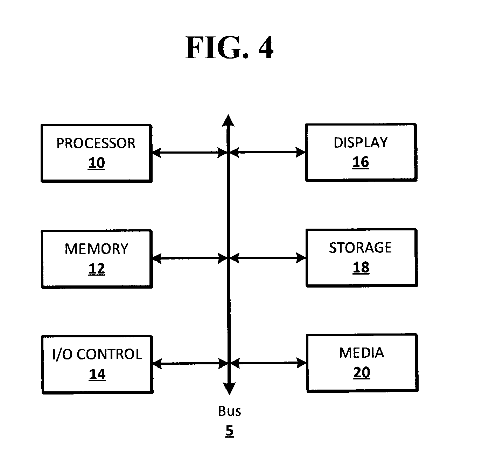

Embodiments of the present invention may be implemented on a variety of computer systems and arrangements. FIG. 2 shows an example illustration of an optimization service provider as disclosed herein. At 400, a service 410 may receive a request from a user (such as a mailer 310, for example) to have a service performed on the user's data. Examples of such services include presorting, change of address processing, phone number appendage, and other services disclosed herein, including list generation or filtering. The request may contain an explicit set of data records, for example where the user is requesting one or more of the services 410 to be performed on an existing set of mailing address data records. Alternatively or in addition, the request may contain user preferences that indicate a type of data record that the user wishes to obtain, and/or for which the user wishes to obtain additional services. Thus, the service 410 may perform the operations described with respect to FIG. 4 on an existing, static set of data records, or it may perform these operations as part of a process of creating or updating a list of data records. In the latter case, the service 410 may append additional information, add additional data records, and/or delete data records from a list that is to be provided to the user. The service 410 may represent or include multiple services, such as where the user explicitly requests more than one service, or where it is determined that additional services should be performed to meet the user's request.

A tally agent 420 may receive data records from the service 410 at 401. The tally agent 420 may identify markers of interest, such as identification fields such as hashes or signatures that exist within the data records, an identification of the user and/or other users that have previously used the service, an identification of the last time the user used the requested service 410, or the like, and record them for further use within the illustrated system. At 402, results may be returned from the tally agent 420 to the service 410. Generally, the tally agent 420 counts markers of interest for each data record obtained by the service 410. In some configurations, the results returned at 402 may not affect the resulting set of data records directly. For example, the results may include traits to be appended to the data records, such as hash codes, signatures, or other identifiers. Such identifiers may be used to track the data records through subsequent processing in the illustrated system, such as by the suggestion oracle and/or the passive preference optimizer as described herein. The identifiers also may be used to track the data records in subsequent operations performed by the service 410 or another service, or in subsequent requests from one or more users.

At 403, a passive preference optimizer engine 440 may be contacted and provided with data collected by the tally agent 420, such as the generated signatures or other traits and markers as previously described. In general, the passive preference optimizer 440 is responsible for consolidating, aggregating, and storing information that may be used to generate a quality rating for each data record. For example, the passive preference optimizer may identify additional attributes associated with each data record, and annotate those records to expedite subsequent processing of the records. At 404, the engine 440 may provide results to the tally agent 420, which indicate any additional identifiers, attributes, or the like that are generated by the passive preference optimizer 440.

As previously described, in an embodiment suggestions regarding data records to be included in or excluded from a mailing list may be provided to a service and/or a mailer. At 406, the service 410 may consult a suggestion oracle 430 for appropriate records to include or exclude, or for attributes that may be of use in fulfilling the mailer's request. Similar to the procedure used by the tally agent 420, at 408 the suggestion oracle 430 may query the passive preference optimization engine 440, and/or may provide other results that the engine 440 uses to determine quality ratings. The engine 440 may provide results at 409 to be used by the suggestion oracle 430, and may store additional data received from the suggestion oracle 430 that can be used to assign or adjust later quality ratings. At 407, the suggestion oracle 430 may provide an indication of the records to include or exclude, and/or attributes that can be used to fulfill the mailer's 310 request.

It will be understood that the specific arrangement and combination of components shown in FIG. 2 is illustrative only, and is not intended to be limiting. The illustrated components may be combined, omitted, or adapted relative to the specific arrangement shown. For example, the tally agent 420 and suggestion oracle 430 may be combined in a single component, or equivalent functionality may be provided by one or more other components. In some configurations, the illustrated components may be provided by a single computer system, which may operate such that a user cannot distinguish between functions provided by the different components.

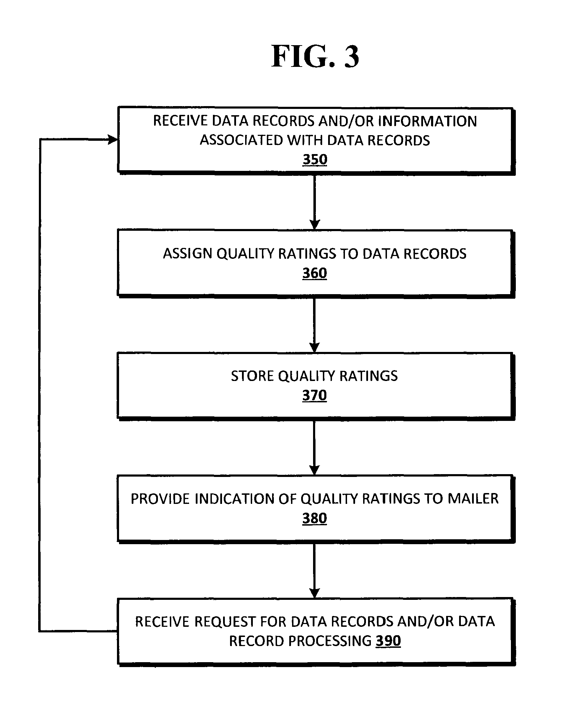

FIG. 3 shows an example process according to an embodiment of the invention. Examples of the techniques and transactions illustrated in FIG. 3 have been previously described herein, and the associated descriptions of each step shown in FIG. 3 apply equally to the examples shown therein. Furthermore, different combinations of the steps illustrated in FIG. 3 may be performed by one or more entities as disclosed herein, and various illustrated steps may be omitted from some embodiments as previously described.

At 350, data records and/or information associated with data records may be obtained as previously disclosed. For example, use information that indicates how data records have been used by mailers in the past may be obtained. As another example, a set of data records or a request for a set of data records matching certain preferences may be obtained, such as from a prospective mailer. Quality ratings may be identified, generated, and/or assigned to the data records. For example, quality ratings based upon prior use of the data records by the mailer and/or other entities may be assigned to the records as previously disclosed. These quality ratings may be stored at 370, such as for future use and/or revision.

An indication of the quality ratings may be provided to a mailer at 380. As previously disclosed, the indication may be provided as part of a list of mailing addresses to use for a mailing, an explicit indication of relative or absolute quality ratings, or the like. The quality ratings may be refined as previously disclosed, such as by repeating some or all of the steps 350-380 based upon subsequent use of data records by the same or different mailers, or based upon other information including mailing and non-mailing information associated with the data records.

Implementations of the presently disclosed subject matter may be implemented in and used with a variety of component and network architectures. FIG. 4 is an example computer device suitable for implementing implementations of the presently disclosed subject matter. The device may be, for example, a desktop computer, a laptop or palmtop computer, a portable computing device such as a tablet, smartphone, mobile computer, or the like, a server, or, more generally, any computing device that can implement the features disclosed herein. In some implementations, various specific hardware devices may be used or preferred, as described elsewhere herein.

The computer may include a bus 5 which interconnects major components of the computer. Such components may include a central processor 10, which may be a general- or special-purpose processor. When configured to implement the features disclosed and claimed herein, the central processor may become, and/or operate as, a special-purpose processor that implements those features. The computer 20 may include one or more memory modules 12 (typically RAM, but which may also include ROM, flash RAM, or the like), to store instructions, data, and the like. An input/output controller 14 or similar module, may provide an interface to and/or control of various user input devices, such as a mouse, keyboard, touchscreen, and the like. The user display 16 may provide a visual user interface and/or user input mechanism, such as via a display screen and/or a touchscreen. Fixed storage 18, such as a hard drive, flash storage, or similar storage mechanism, may provide long-term storage for data, executable instructions such as application programs, and the like. A removable media component 20 may control and receive a removable storage device, such as an optical disk, flash drive, SD card, USB drive, and the like. The computer may include various other components and interfaces, such as interfaces to allow other devices to connect to the computer, including USB, audio inputs and/or outputs, IEEE 1394, proprietary connectors, and the like.

The bus 5 may provide or allow data communication between the central processor 10 and the memory 12, which may include ROM, flash memory, and/or RAM, as previously noted. The RAM is generally the main memory into which the operating system and application programs are loaded. The ROM and/or flash memory can contain, among other code, the Basic Input-Output system (BIOS) which controls basic hardware operation such as the interaction with peripheral components. Applications resident with the computer device typically may be stored on and accessed via a computer readable medium provided via the fixed storage 18 and/or removable media 20, such as a hard disk drive, an optical drive, or any other suitable storage medium.

The illustrated components may be integral with the computer or may be separate and accessed through other interfaces. For example, a computer-readable storage 18, memory 12, processor 10, and/or various other components may be provided by a cloud service or other remote service. Similarly, a portion of the functionality provided by one or more components may be provided by a remote service, such as a cloud service. As a specific example, a device as disclosed herein may include local storage 18 and may also interface with a cloud service that provides additional storage, the integration of which with the local storage 18 may be undetectable by a user. A network interface 22 may provide a direct connection to a remote server, cloud service, or the like. The network interface 29 may connect to one or more other computing devices and/or networks using wireless techniques and connections such as a digital cellular telephone, an IEEE 802.11x or other wireless network, a Bluetooth interface, or the like. For example, the network interface 22 may allow the computer to communicate with other computers via one or more local, wide-area, or other networks.

Many other devices or components may be connected in a similar manner, including peripherals and other devices such as document scanners, digital cameras, printers, external displays, external user input devices, and the like. Conversely, all of the components shown in FIG. 1 need not be present to practice or implement aspects of the disclosed subject matter. The illustrated components and other components can be interconnected in different ways from that shown. The general operation of computing devices such as the example device illustrated in FIG. 1 is readily known in the art and is not discussed in detail in this application. Executable instructions to implement the present disclosure may be stored in various computer-readable storage media such as one or more of the memory 12, fixed storage 18, removable media 20, on a remote storage device, or any combination thereof.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
receiving information for a plurality of data records, each data record associated with a potential recipient of a mailpiece;
assigning a quality rating to each data record of the plurality, the quality rating indicating an assigned likelihood that a solicitation mailpiece is expected to receive a favorable response from the associated potential recipient;
storing the corresponding quality rating for each data record; and
in response to a request associated with the plurality of data records received from a mailer, providing an indication of the quality rating for each of the plurality of data records to the mailer.

2. The method of claim 1, wherein the information comprises use information indicating a previous operation performed with the data record by the mailer.

3. The method of claim 1, wherein the information comprises at least one item selected from the group consisting of: whether the data record previously was excluded from a mailing list by the mailer; whether the data record previously was submitted for additional processing by the mailer; and tracking information for a mailpiece previously associated with the data record.

4. The method of claim 3, wherein the information comprises an indication that the data record previously was submitted for additional processing by the mailer, the additional processing comprising at least one operation selected from the group consisting of: address verification, a recipient relocation update, address formatting, ZIP code verification, and intelligent mail barcode assignment.

5. The method of claim 1, wherein the information comprises at least one item selected from the group consisting of: whether a mailpiece associated with the data record previously was delivered successfully; whether the potential recipient previously responded favorably to a prior mailing; and whether a tracking code previously was assigned to a mailpiece associated with the data record.

6. The method of claim 1, further comprising:
receiving non-mailing information for each of the plurality of data records; and
assigning the quality rating to each data record further based upon the non-mailing information.

7. The method of claim 6, wherein the non-mailing information comprises at least one item selected from the group consisting of: a do-not-call record for the recipient associated with the data record; a previous response to a mailing by the recipient associated with the data record; and demographic information for the recipient associated with the data record.

8. The method of claim 7, wherein the non-mailing information comprises demographic information for the recipient associated with the data record, the demographic information comprising at least one item selected from the group consisting of: age, income, residence location, household size, gender, race, nationality, marital status, family status, and occupation.

9. The method of claim 1, wherein the information is obtained passively from the mailer based upon one or more additional services provided to the mailer for the plurality of data records.

10. The method of claim 1, wherein the information is obtained passively based upon one or more additional services provided to a plurality of mailers for the plurality of data records.

11. The method of claim 1, wherein the information is obtained passively from the mailer based upon one or more actions performed by the mailer using the plurality of data records.

12. The method of claim 1, wherein the indication of the quality rating for each of the plurality of data records provided to the mailer comprises a mailing list including only those data records having a quality rating above a threshold.

13. The method of claim 1, wherein the indication of the quality rating for each of the plurality of data records provided to the mailer comprises a numeric indication of the quality rating for each of the plurality of data records or a relative ranking of the plurality of data records.

14. The method of claim 1, further comprising a step of providing a confidence value for each quality rating, the confidence value indicating a likelihood that the provided quality rating correctly indicates the likelihood that the solicitation mailpiece will receive a favorable response from the associated potential recipient.

15. A system for carrying out the method of claims 1 to 14.
